# EUROPEAN PATENT APPLICATION

(11) **EP 3 843 040 A1**
(43) Date of publication of application: **30.06.2021**
(21) Application number: 19868527.3
(22) Date of filing: 18.09.2019
(51) Int. Cl.: G06T 9/00

(54) **IMAGE PROCESSING DEVICE AND METHOD**

(30) Priority: 02.10.2018 JP 2018187483
(71) Applicant: Sony Corporation, Tokyo 108-0075 (JP)
(72) Inventor: NAKAGAMI, Ohji, Tokyo 108-0075 (JP); YANO, Koji, Tokyo 108-0075 (JP); KUMA, Satoru, Tokyo 108-0075 (JP); KATO, Tsuyoshi, Tokyo 108-0075 (JP)
(74) Representative: D Young & Co LLP
(86) International application number: PCT/JP2019/036470
(87) International publication number: WO 2020/071115

(57) **Abstract**

The present disclosure relates to an image processing device and a method that are configured to be capable of reducing the increase of a load on encoding/decoding of attribute information of a point cloud.

The attribute information of the point cloud is encoded using contexts corresponding to weight values obtained by an orthogonal transformation made on location information of the point cloud, the orthogonal transformation taking into consideration a three-dimensional structure. Further, encoded data associated with the attribute information of the point cloud is decoded using contexts corresponding to weight values obtained by an orthogonal transformation made on the location information of the point cloud, the orthogonal transformation taking into consideration a three-dimensional structure. The present disclosure can be applied to, for example, image processing devices, electronic equipment, image processing methods, programs, and the like.

## Description

### [Technical Field]

The present disclosure relates to an image processing device and a method, and in particular, relates to an image processing device and a method that are configured to be capable of reducing the increase of a load on encoding/decoding of attribute information of a point cloud.

### [Background Art]

Heretofore, for example, an encoding method using an octree has been known as an encoding method for 3D data representing a three-dimensional structure, such as a point cloud (see, for example, NPL 1).

Recently, a method has been proposed for encoding attribute information by using RAHT (Region Adaptive Hierarchical Transform) (see, for example, NPL 2).

### [Citation List]

### [Non Patent Literature]

[NPL 1]
   R. Mekuria, Student Member IEEE, K. Blom, P. Cesar., Member, IEEE, "Design, Implementation and Evaluation of a Point Cloud Codec for Tele-Immersive Video," tcsvt_paper_submitted_february.pdf
[NPL 2]
   Ohji Nakagami, Phil Chou, Maja Krivokuca, Khaled Mammou, Robert Cohen, Vladyslav Zakharchenko, Gaelle Martin-Cocher, "Second Working Draft for PCC Categories 1, 3," ISO/IEC JTC1/SC29/WG11, MPEG 2018/N17533, April 2018, San Diego, US

### [Summary]

### [Technical Problem]

In the case of the above methods, however, likely to arise is a situation in which a load on encoding/decoding of the attribute information of the point cloud increases because of the increased processing caused by the rearrangement of coefficients into the descending order of weight values obtained by the RAHT.

The present disclosure has been made in view of the above situation and is aimed to make it possible to reduce the increase of the load on the encoding/decoding of the attribute information of the point cloud.

### [Solution to Problem]

An image processing device according to an aspect of the present technology is an image processing device including an encoding section that encodes attribute information of a point cloud by using contexts corresponding to weight values obtained by an orthogonal transformation made on location information of the point cloud, the orthogonal transformation taking into consideration a three-dimensional structure.

An image processing method according to an aspect of the present technology is an image processing method including encoding attribute information of a point cloud by using contexts corresponding to weight values obtained by an orthogonal transformation made on location information of the point cloud, the orthogonal transformation taking into consideration a three-dimensional structure.

An image processing device according to another aspect of the present technology is an information processing device including a decoding section that decodes encoded data associated with attribute information of a point cloud, by using contexts corresponding to weight values obtained by an orthogonal transformation made on location information of the point cloud, the orthogonal transformation taking into consideration a three-dimensional structure.

An image processing method according to another aspect of the present technology is an image processing method including decoding encoded data associated with attribute information of a point cloud, by using contexts corresponding to weight values obtained by an orthogonal transformation made on location information of the point cloud, the orthogonal transformation taking into consideration a three-dimensional structure.

In the image processing device and method according to an aspect of the present technology, attribute information of a point cloud is encoded using contexts corresponding to weight values obtained by an orthogonal transformation made on location information of the point cloud, the orthogonal transformation taking into consideration a three-dimensional structure.

In the image processing device and method according to another aspect of the present invention, encoded data associated with attribute information of a point cloud is decoded using contexts corresponding to weight values obtained by an orthogonal transformation made on location information of the point cloud, the orthogonal transformation taking into consideration a three-dimensional structure.

### [Brief Description of Drawings]

[FIG. 1]

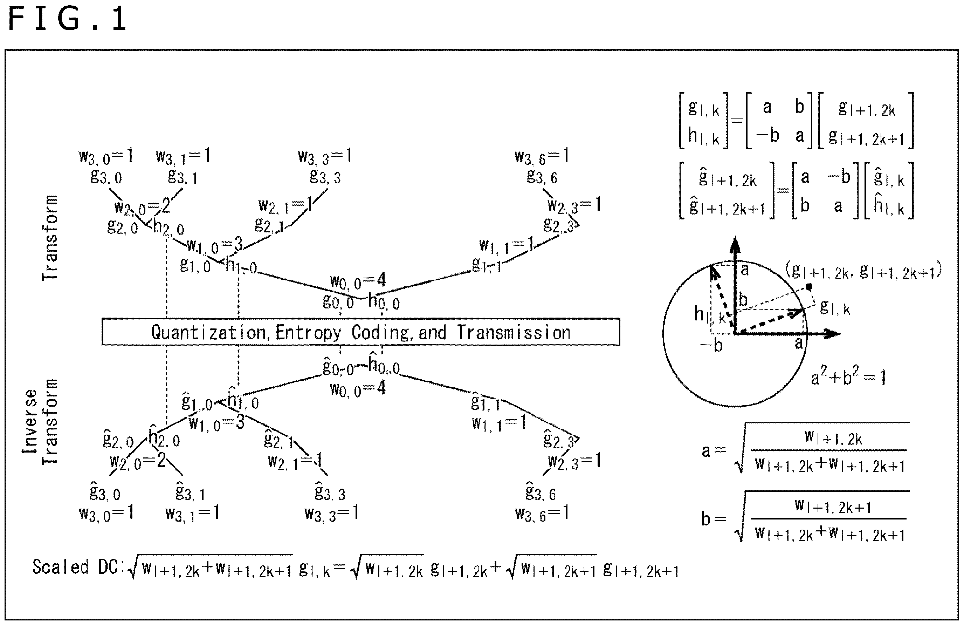

   FIG. 1 is a diagram that describes the outline of RAHT.
[FIG. 2]

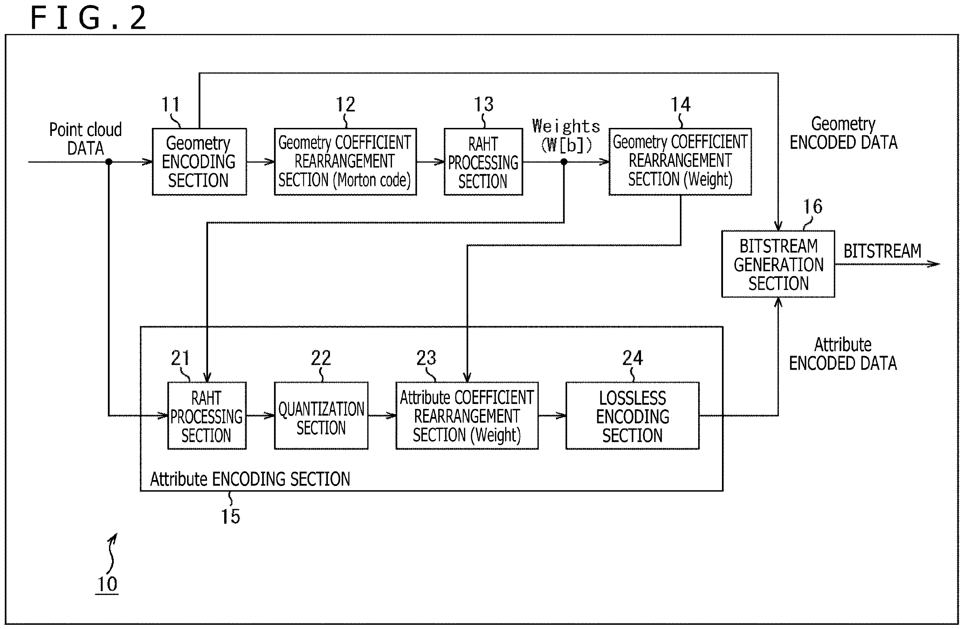

   FIG. 2 is a block diagram illustrating a main configuration example of an encoding device.
[FIG. 3]

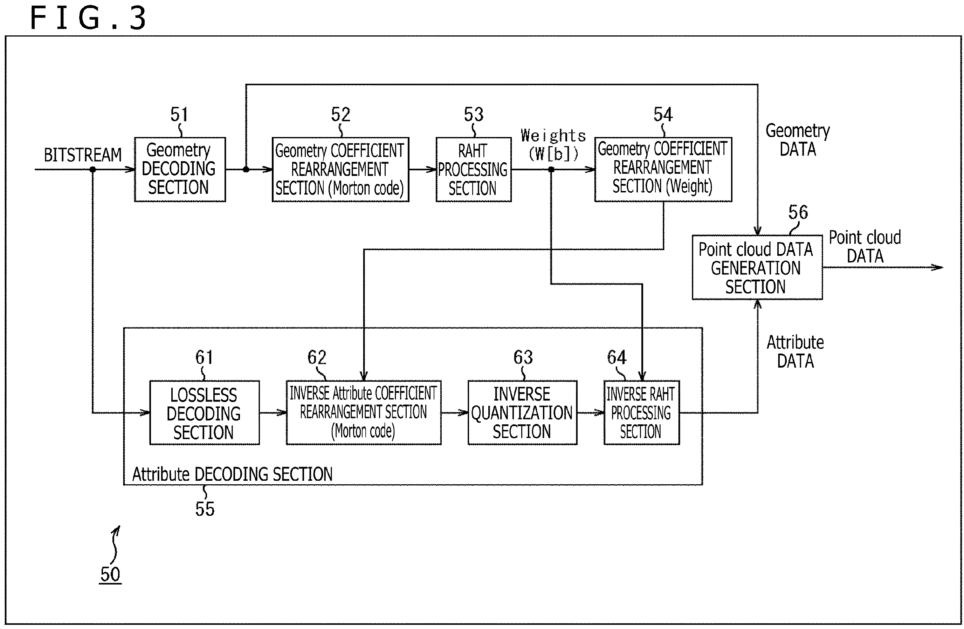

   FIG. 3 is a block diagram illustrating a main configuration example of a decoding device.
[FIG. 4]

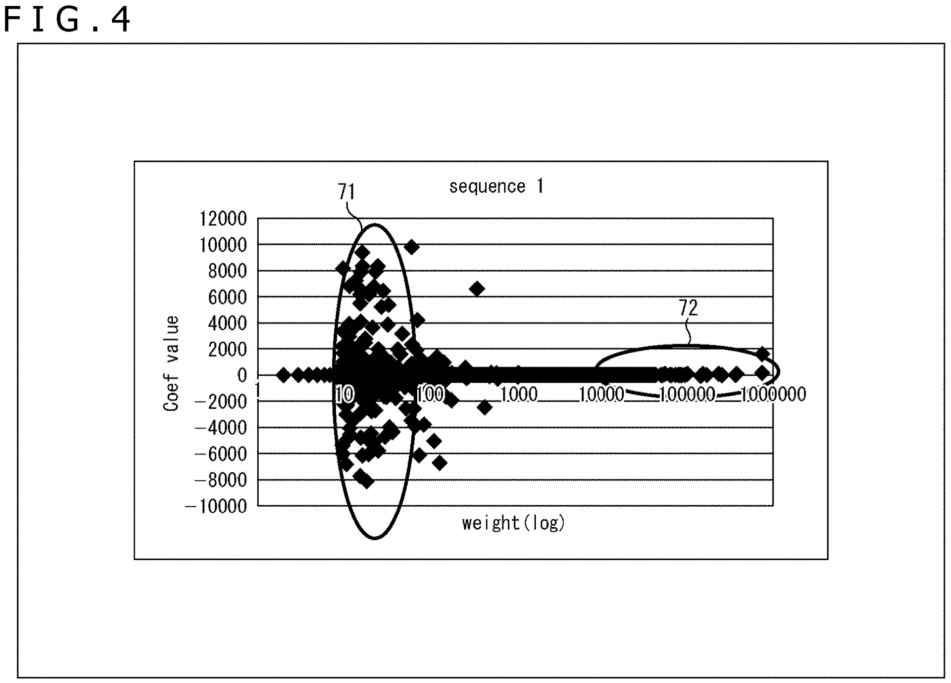

   FIG. 4 is a diagram illustrating an example of a condition of the distribution of coefficient values corresponding to individual weight values.
[FIG. 5]

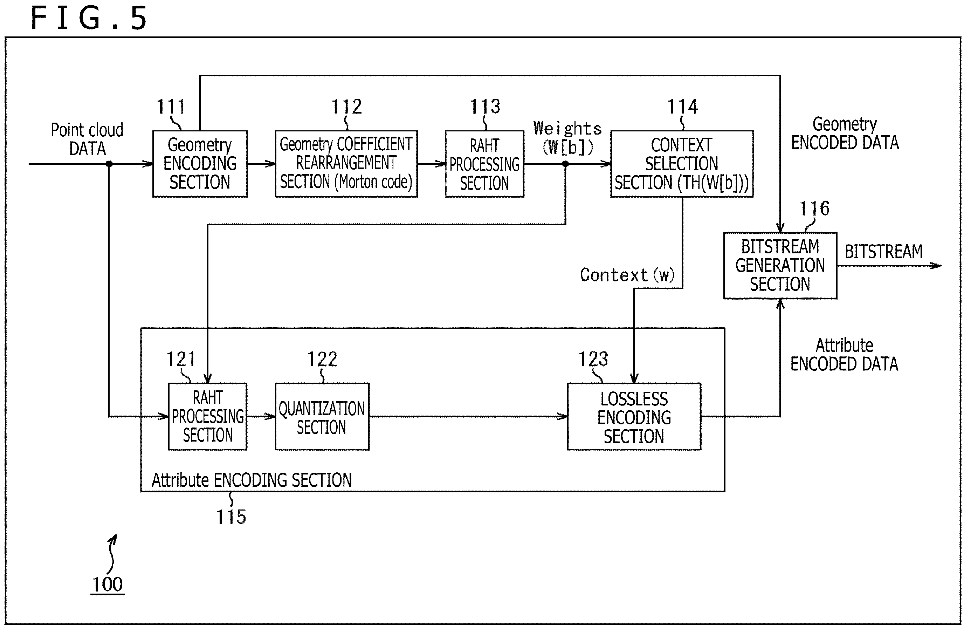

   FIG. 5 is a block diagram illustrating a main configuration example of an encoding device.
[FIG. 6]

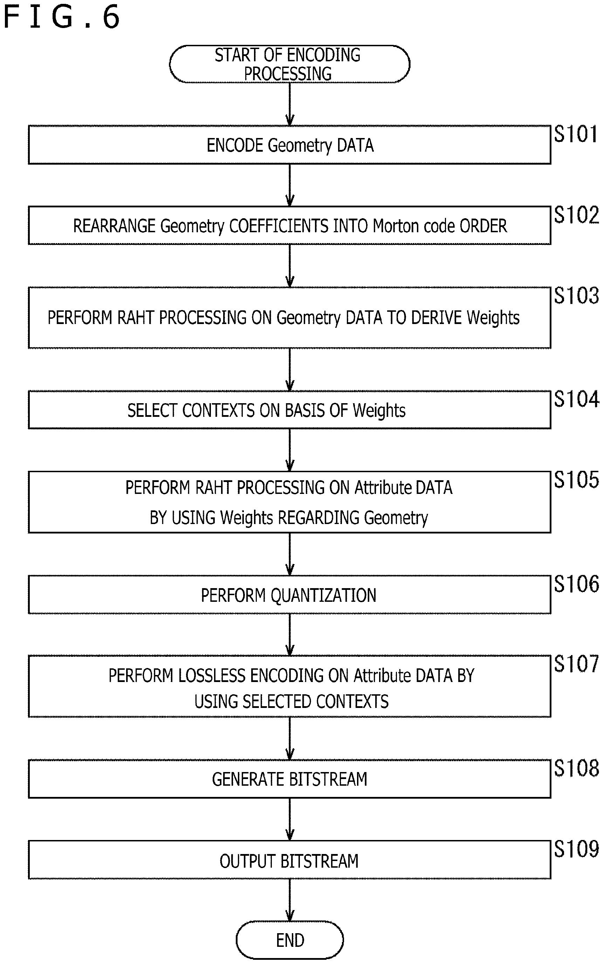

   FIG. 6 is a flowchart illustrating an example of the flow of encoding processing.
[FIG. 7]

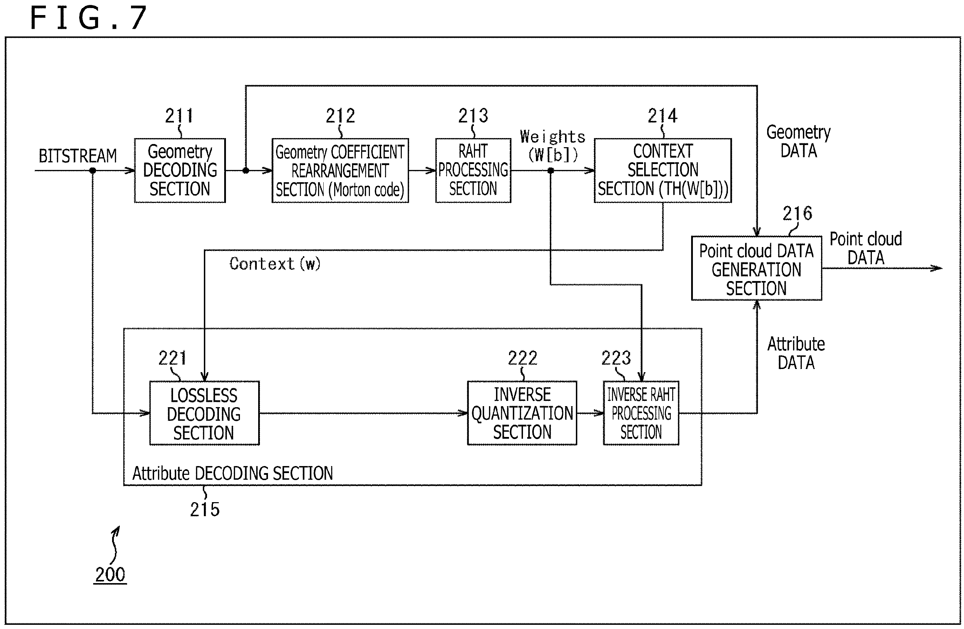

   FIG. 7 is a block diagram illustrating a main configuration example of a decoding device.
[FIG. 8]

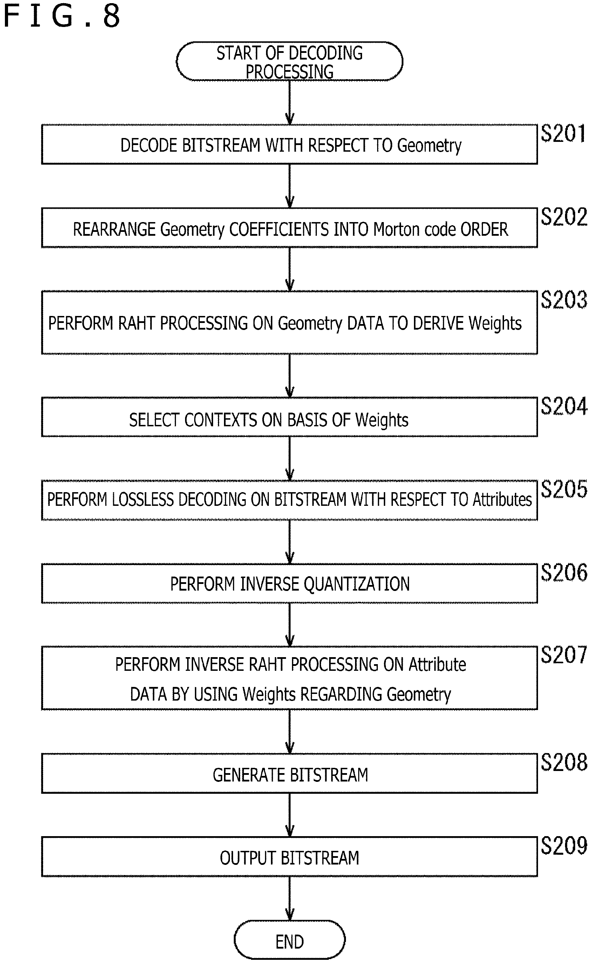

   FIG. 8 is a flowchart illustrating an example of the flow of decoding processing.
[FIG. 9]

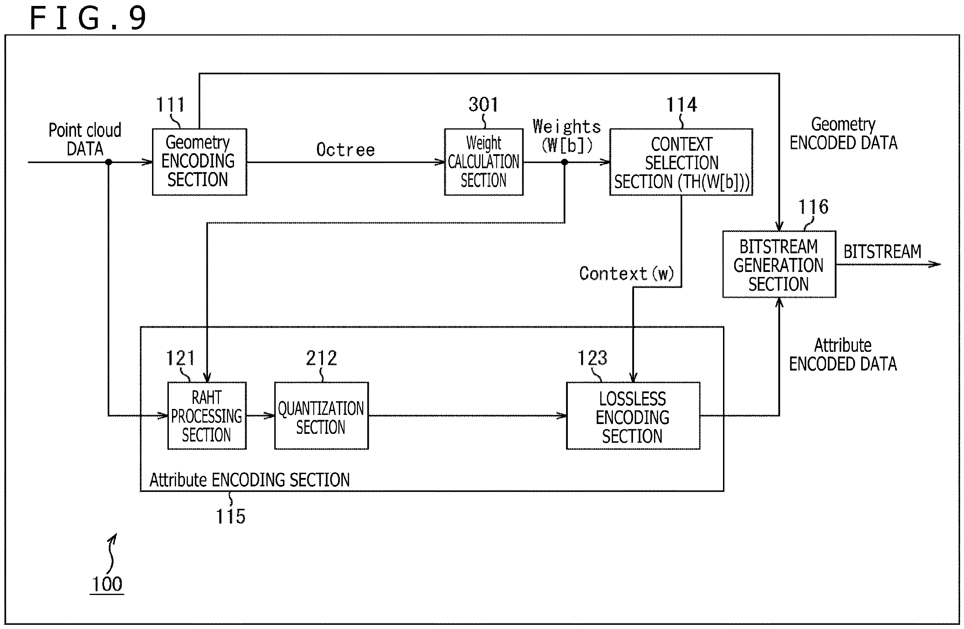

   FIG. 9 is a block diagram illustrating a main configuration example of an encoding device.
[FIG. 10]

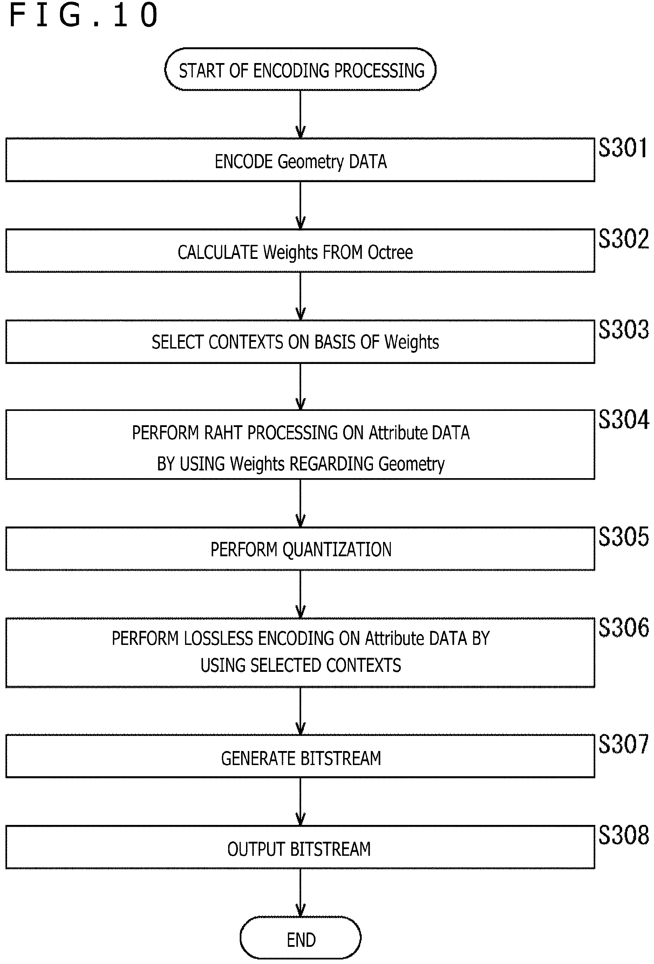

   FIG. 10 is a flowchart illustrating an example of the flow of encoding processing.
[FIG. 11]

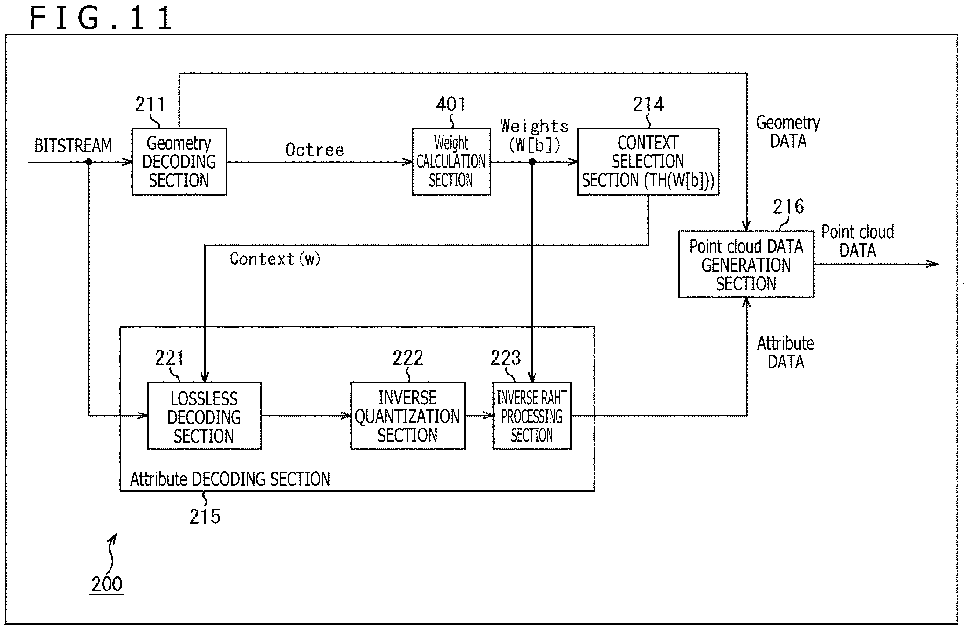

   FIG. 11 is a block diagram illustrating a main configuration example of a decoding device.
[FIG. 12]

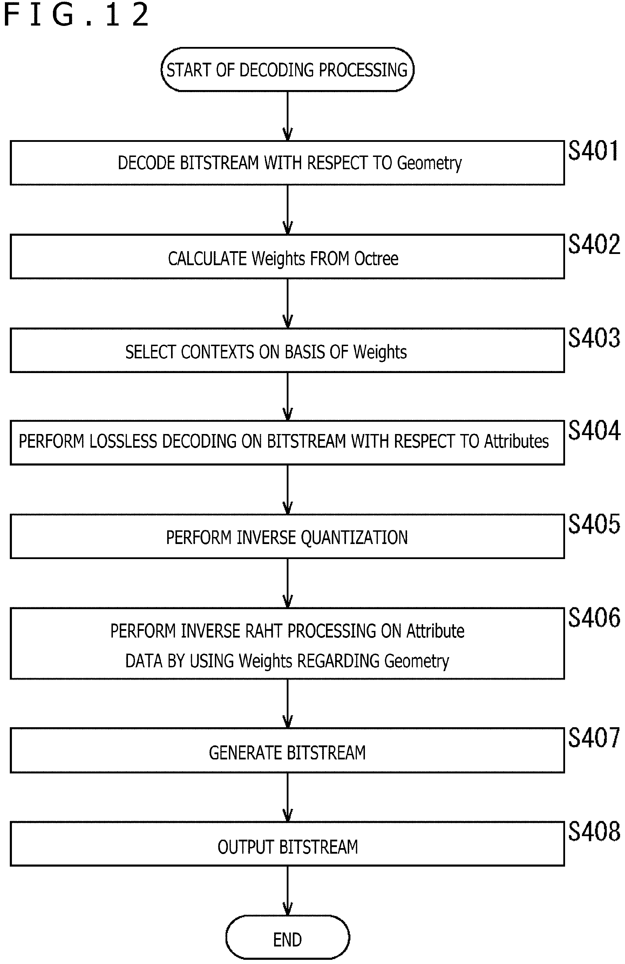

   FIG. 12 is a flowchart illustrating an example of the flow of decoding processing.
[FIG. 13]

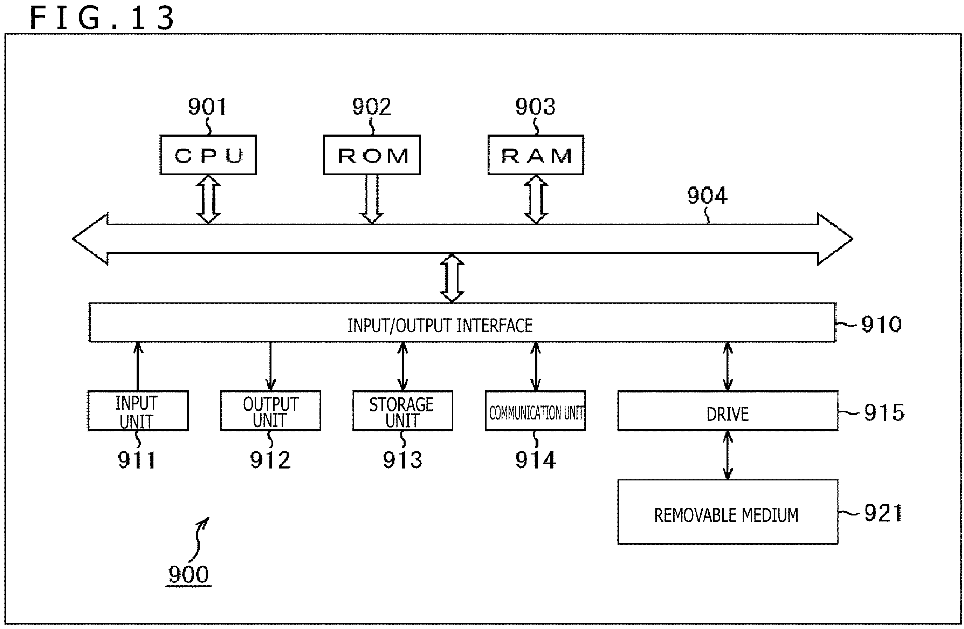

   FIG. 13 is a block diagram illustrating a main configuration example of a computer.

### [Description of Embodiments]

Hereinafter, modes for practicing the present disclosure (hereinafter referred to embodiments) will be described. Here, the description will be made in the following order.
1. Encoding of attribute information
2. First embodiment (encoding device)
3. Second embodiment (decoding device)
4. Third embodiment (encoding device)
5. Fourth embodiment (decoding device)
6. Appended notes

### <1. Encoding of attribute information>

### <Documents, etc., that support technical contents and technical terms>

The scope of the disclosure of the present technology includes not only contents described in the embodiments, but also contents described in the following pieces of non-patent literature that are already publicly known at the time of filing of the present disclosure.

NPL 1: (mentioned above)
NPL 2: (mentioned above)
NPL 3: TELECOMMUNICATION STANDARDIZATION SECTOR OF ITU (International Telecommunication Union), "Advanced video coding for generic audiovisual services," H.264, 04/2017
NPL 4: TELECOMMUNICATION STANDARDIZATION SECTOR OF ITU (International Telecommunication Union), "High efficiency video coding," H.265, 12/2016
NPL 5: Jianle Chen, Elena Alshina, Gary J. Sullivan, Jens-Rainer, Jill Boyce, "Algorithm Description of Joint Exploration Test Model 4," JVET-G1001_v1, Joint Video Exploration Team (JVET) of ITU-T SG 16 WP 3 and ISO/IEC JTC 1/SC 29/WG 11 7th Meeting: Torino, IT, 13-21 July 2017

That is, contents described in the above pieces of non-patent literature also serve as grounds at the time of the determination of support requirements. For example, Quad-Tree Block Structure described in NPL 4 and QTBT (Quad Tree Plus Binary Tree) Block Structure described in NPL 5 are deemed to fall within the scope of the disclosure of the present technology and satisfy support requirements for the scope of the appended claims even when not directly described in the embodiments. Further, technical terms such as parsing, syntax, and semantics are similarly deemed to fall within the scope of the disclosure of the present technology and satisfy the support requirements for the scope of the appended claims even when not directly described in the embodiments.

### <Point cloud>

In the past, there existed various kinds of 3D data which include a point cloud that represents a three-dimensional structure by using location information, attribute information, and the like of a point cluster, a mesh that includes apexes, edges, and faces and defines a three-dimensional shape by using a polygonal representation, and the like.

For example, in the case of the point cloud, a tridimensional structure (a three-dimensionally-shaped object) is represented as a set of a large number of points (a point cluster). That is, pieces of data constituting the point cloud (which are also referred to as point cloud data) include location information and attribute information (for example, color and the like) associated with each of points constituting the point cluster. Thus, the point cloud has a relatively simple structure and is capable of sufficiently accurately representing any tridimensional structure by using a sufficiently large number of points.

### <Quantization of location information by using voxels>

For such point cloud data, since its data amount is relatively large, an encoding method using voxels has been invented to compress an amount of data targeted for encoding and the like. The voxels are three-dimensional regions for use in quantizing location information targeted for encoding.

That is, a three-dimensional region containing a point cloud is separated into small three-dimensional regions called voxels and is configured to indicate, for each of the voxels, whether or not each voxel contains one or more points. In such a manner, the locations of the individual points are quantized for each of the voxels. Thus, converting the point cloud data into data of such voxels (also referred to as voxel data) makes it possible to reduce the increase of the amount of information (typically, to decrease the amount of information).

### <Octree>

Moreover, a method has been invented for establishing an octree by using such voxel data. An octree is a structure resulting from tree-structuring of the voxel data. The value of each of bits of a lowest-layer node of the octree indicates the presence/absence of a point of a corresponding voxel. For example, a value "1" indicates a voxel containing one or more points, and a value "0" indicates a voxel containing no point. In the octree, one node corresponds to eight voxels. That is, each of nodes constituting the octree includes data composed of eight bits, and the eight bits each indicate the presence/absence of a point of a corresponding one of the eight voxels.

Further, an upper-layer node of the octree indicates the presence/absence of one or more points with respect to one region obtained by integrating eight voxels corresponding to each of lower-layer nodes belonging to the upper-layer node. That is, the upper-layer node is generated by integrating information regarding the voxels of the lower-layer nodes. Here, for a node having the value "0," that is, for a node in the case where all of corresponding eight voxels contain no point, the node is deleted.

In such a manner, a tree structure (octree) including nodes each not having the value "0" is established. That is, the octree is capable of indicating, for each of resolution levels, the presence/absence of one or more points with respect to voxels. Thus, encoding voxel data having been transformed into such an octree structure makes it possible to further easily restore voxel data having further various resolution levels at the time of decoding the voxel data. That is, the scalability of the voxels can be further easily achieved.

Further, the above-described method of omitting the node having the value "0" makes it possible to cause a voxel including regions in which no point exists to be a voxel of a low-resolution level, thus enabling further reduction of the increase of the amount of information (typically, further decrease of the amount of information).

### <RAHT>

Recently, as described in, for example, PTL 2, a method has been proposed for encoding attribute information of a point cloud by using RAHT (Region Adaptive Hierarchical Transform). The attribute information includes, for example, color information, reflectance information, normal-line information, and the like.

The RAHT is one of orthogonal transformations taking into consideration a three-dimensional structure, and is a Haar transformation using weighting (weight values) according to a point-to-point location relationship (for example, whether or not one or more points exist in an adjacent voxel) in a voxelized space.

For example, as illustrated in FIG. 1, processing proceeds such that, in the case where one or more points exist in a region adjacent to a region targeted for the Haar transformation, the weight value of the adjacent region is added to the weight value of the region targeted for the Haar transformation, whereas, in the case where no point exists in the adjacent region, the weight value of the region targeted for the Haa transform is inherited as it is. That is, the denser the points of a portion are, the larger the weight value of the portion is. Thus, the dense/non-dense of the points can be determined from a weight value.

For example, performing quantization so as to allow points included in dense portions to remain on the basis of the weight values makes it possible to increase the efficiency of the encoding simultaneously with reducing the degradation of the quality of the point cloud.

### <Encoding device>

An encoding device 10 illustrated in FIG. 2 is an example of a device that encodes a point cloud by making such a coefficient rearrangement. For example, in the case of the encoding device 10, a geometry encoding section 11 generates geometry encoded data by encoding location information of input point cloud data.

A geometry coefficient rearrangement section 12 rearranges the coefficients of the geometry encoded data into Morton code order. A RAHT processing section 13 performs RAHT on the coefficients of the geometry encoded data in the Morton code order. Through this processing, weight values are derived.

A RAHT processing section 21 of an attribute encoding section 15 performs RAHT on attribute information by using the weight values that the RAHT processing section 13 has derived on the basis of the location information. A quantization section 22 quantizes transformed coefficients of the attribute information that are obtained by the above RAHT.

Further, a geometry coefficient rearrangement section 14 rearranges the coefficients into the descending order of the weight values having been derived by the RAHT processing section 13. An attribute coefficient rearrangement section 23 rearranges the quantized coefficients having been obtained by the quantization section 22 into the same order as that of the coefficients having been rearranged by the geometry coefficient rearrangement section 14. That is, a lossless encoding section 24 encodes the individual coefficients of the attribute information in the descending order of the weight values.

Further, a bitstream generation section 16 generates and outputs a bitstream including geometry encoded data that is encoded data associated with the location information and that has been generated by the geometry encoding section 11 and attribute encoded data that is encoded data associated with the attribute information and that has been generated by the lossless encoding section 24.

### <Decoding device>

A decoding device 50 illustrated in FIG. 3 is an example of a device that decodes encoded data of a point cloud by making such a coefficient rearrangement. For example, in the case of the decoding device 50, a geometry decoding section 51 decodes geometry encoded data included in an input bitstream. A geometry coefficient rearrangement section 52 rearranges coefficient data (geometry coefficients) having been decoded and obtained, into Morton code order.

A RAHT processing section 53 performs RAHT on the geometry coefficients that are arranged in the Morton code order, to derive weight values. A geometry coefficient rearrangement section 54 rearranges the coefficients into the descending order of the weight values having been derived by the RAHT processing section 53.

A lossless decoding section 61 of an attribute decoding section 55 decodes attribute encoded data included in the input bitstream. An inverse attribute coefficient rearrangement section 62 rearranges attribute coefficients having been arranged in descending order of the weight values into Morton code order, on the basis of the descending order of the weight values, which is indicated by the geometry coefficient rearrangement section 54. Further, the inverse quantization section 63 performs inverse quantization on the attribute coefficients arranged in the Morton code order.

An inverse RAHT processing section 64 performs inverse RAHT, which is processing inverse to the RAHT, on the inverse-quantized attribute coefficients by using the weight values having been derived by the RAHT processing section 53, to generate attribute information (attribute data).

A point cloud data generation section 56 generates point cloud data by synthesizing location information (geometry data) having been generated by the geometry decoding section 51 and the attribute information (attribute data) having been generated by the inverse RAHT processing section 64, and outputs the generated point cloud data.

### <Rearrangement of coefficients>

As described above, in the above encoding and decoding, the rearrangement which causes the coefficient data associated with the attribute information to be arranged in the descending order of the weight values has been made.

FIG. 4 illustrates a graph representing relations between weight values and coefficient variations. As indicated in FIG. 4, the larger the weight value is, the smaller the coefficient variation is. Thus, performing encoding/decoding from a larger weight value with higher priority makes it possible to increase the efficiency of the encoding.

This rearrangement, however, requires a significantly large amount of processing. In particular, in the case of such a point cloud having a significantly large amount of data, the increase of the load on the rearrangement processing becomes further remarkable. Such a method as described above has thus been likely to cause the increase of the load on the encoding/decoding of the attribute information of the point cloud.

### <Selection of contexts>

For this reason, implemented is a configuration in which, instead of the rearrangement of the coefficients, contexts are selected according to the above-described weight values.

For example, in the case of the encoding, implemented is a configuration in which attribute information of a point cloud is encoded using contexts corresponding to weight values obtained by an orthogonal transformation made on location information of the point cloud, the orthogonal transformation taking into consideration a three-dimensional structure.

For example, an image processing device includes an encoding section that encodes attribute information of a point cloud using contexts corresponding to weight values obtained by an orthogonal transformation made on location information of the point cloud, the orthogonal transformation taking into consideration a three-dimensional structure.

Employing such a configuration enables reduction of the increase of the load on the encoding of the attribute information of the point cloud.

Further, for example, in the case of the decoding, implemented is a configuration in which encoded data associated with attribute information of a point cloud is decoded by using contexts corresponding to weight values obtained by an orthogonal transformation made on location information of the point cloud, the orthogonal transformation taking into consideration a three-dimensional structure.

For example, an image processing device includes a decoding section that decodes encoded data associated with attribute information of a point cloud, by using contexts corresponding to weight values obtained by an orthogonal transformation made on location information of the point cloud, the orthogonal transformation taking into consideration a three-dimensional structure.

Employing such a configuration enables reduction of the increase of the load on the decoding of the attribute information of the point cloud.

For example, in the graph of FIG. 4, there is a significantly large difference between the variations of coefficients in areas where weight values are small (for example, in the vicinity enclosed by a frame 71) and those in areas where weight values are large (for example, in the vicinity enclosed by a frame 72). That is, the variation degrees of the coefficients depend on the weight values. In other words, the variation degrees of the coefficients are, to some extent, determined according to the weight values. For this reason, implemented is a configuration in which plural contexts each associated with mutually different variation degrees of the coefficients are prepared, and a context to be applied is selected from among the contexts on the basis of the weight values. Implementing such a configuration makes it possible to, on the basis of a weight value, select a context that is further suitable for coefficient variations at the weight value. That is, performing the encoding/decoding using a context according to a weight value (coefficient variations) enables reduction of the decrease of the efficiency of the encoding.

Further, in the case of this method, the rearrangement of the coefficients is unnecessary, and thus, reduction of the increase of the load can be achieved. That is, the decrease of the efficiency of the encoding can be reduced simultaneously with reducing the increase of the load thereon.

### <2. First embodiment>

### <Encoding device>

FIG. 5 is a block diagram illustrating a configuration example of an encoding device that is an embodiment of an image processing device to which the present technology is applied. An encoding device 100 illustrated in FIG. 4 is a device that encodes location information and attribute information of a point cloud.

Note that FIG. 5 illustrates only main elements of processing sections, data flows, and the like, and the elements illustrated in FIG. 5 are not necessarily all elements. That is, in the encoding device 100, one or more processing sections that are not illustrated as blocks in FIG. 5 may exist, and one or more processes and one or more data flows that are not illustrated as arrows in FIG. 5 may exist.

As illustrated in FIG. 5, the encoding device 100 includes a geometry encoding section 111, a geometry coefficient rearrangement section 112, a RAHT processing section 113, a context selection section 114, an attribute encoding section 115, and a bitstream generation section 116.

The geometry encoding section 111 performs processing regarding encoding of location information. For example, the geometry encoding section 111 obtains and encodes location information of point cloud data having been input to the encoding device 100. The geometry encoding section 111 supplies geometry encoded data obtained by the encoding to the bitstream generation section 116. Further, the geometry encoding section 111 also supplies geometry coefficients, which are the location information, to the geometry coefficient rearrangement section 112.

The geometry coefficient rearrangement section 112 performs processing regarding rearrangement of coefficient data. For example, the geometry coefficient rearrangement section 112 obtains the geometry coefficients supplied from the geometry encoding section 111. The geometry coefficient rearrangement section 112 rearranges the geometry coefficients into Morton code order, and supplies the rearranged geometry coefficients to the RAHT processing section 113.

The RAHT processing section 113 performs processing regarding the RAHT. For example, the RAHT processing section 113 performs the RAHT on the geometry coefficients that are supplied in the Morton code order from the geometry coefficient rearrangement section 112, to derive weight values regarding the location information. The RAHT processing section 113 supplies the derived weight values to the context selection section 114 and (a RAHT processing section 121 of) the attribute encoding section 115.

The context selection section 114 performs processing regarding the selection of contexts. For example, the context selection section 114 obtains the weight values from the RAHT processing section 113. The context selection section 114 selects contexts on the basis of the weight values.

For example, the context selection section 114 preliminarily stores therein a plurality of candidates for the contexts. Mutually different weight values (a value region thereof) are (is) assigned to each of the candidates, and any one of the candidates is selected according to the magnitude of a weight value. For example, this selection of any one of the candidates according to the magnitude of a weight value is made in such a way that, in the case where the weight value is smaller than a threshold value A, a context A assigned to this region is selected, in the case where the weight value is equal to or larger than A but smaller than B, a context B assigned to this region is selected, ···, and in the case where the weight value is equal to or larger than Y, a context Z assigned to this region is selected. Note that each of the candidates is set to a value that is further suited for coefficient variation degrees corresponding to an assigned value region.

That is, implemented is a configuration in which the context selection section 114 selects a context on the basis of a weight value and this selection enables selection of the context that is further suited for a coefficient variation degree corresponding to the weight value.

Here, the number of the candidates and the magnitudes of the threshold values can be determined freely. These values may be, for example, preliminarily determined fixed values, or may be settable by a user or the like (or may be variable). In the case of being variable, the number of the candidates and the magnitudes of the threshold values may be configured to be transmitted to a decoding side in such a way as to be included in a bitstream as its header information or the like. Implementing such a configuration enables a decoder to more easily select contexts similar to those for the encoding device 100 by using the header information or the like.

The context selection section 114 supplies the selected contexts to (a lossless encoding section 123 of) the attribute encoding section 115.

The attribute encoding section 115 performs processing regarding encoding of attribute information. For example, the attribute encoding section 115 obtains attribute information of the point cloud data that is input to the encoding device 100, and encodes the attribute information to generate attribute encoded data. The attribute encoding section 115 supplies the generated attribute encoded data to the bitstream generation section 116.

The bitstream generation section 116 generates a bitstream including the geometry encoded data supplied from the geometry encoding section 111 and the attribute encoded data supplied from the attribute encoding section 115, and outputs the bitstream to the outside of the encoding device 100.

Further, the attribute encoding section 115 includes the RAHT processing section 121, a quantization section 122, and the lossless encoding section 123.

The RAHT processing section 121 performs processing regarding the RAHT. For example, the RAHT processing obtains attribute information of the point cloud data that is input to the encoding device 100. Further, the RAHT processing section 121 obtains the weight values supplied from the RAHT processing section 113. The RAHT processing section 121 performs the RAHT on the attribute information by using the weight values. The RAHT processing section 121 supplies transformed coefficients having been obtained by the RAHT to the quantization section 122.

The quantization section 122 performs processing regarding quantization. For example, the quantization section 122 obtains the transformed coefficients supplied from the RAHT processing section. Further, the quantization section 122 quantizes the obtained, transformed coefficients. The quantization section 122 supplies quantized coefficients having been obtained by the quantization to the lossless encoding section 123.

The lossless encoding section 123 performs processing regarding lossless encoding. For example, the lossless encoding section 123 obtains the quantized coefficients supplied from the quantization section 122. Further, the lossless encoding section 123 obtains the contexts having been selected by the context selection section 114. The lossless encoding section 123 encodes the quantized coefficients by using the contexts. That is, the lossless encoding section 123 encodes the attribute information of the point cloud by using the contexts corresponding to the weight values obtained by the orthogonal transformation made on the location information of the point cloud, the orthogonal transformation taking into consideration a three-dimensional structure. The lossless encoding section 123 supplies the bitstream generation section 116 with encoded data (attribute encoded data) that is associated with the attribute information and that has been generated in such a manner as described above.

Here, these processing sections (ranging from the geometry encoding section 111 to the bitstream generation section 116 and ranging from the RAHT processing section 121 to the lossless encoding section 123) each have an optional configuration. For example, each of these processing sections may include a logic circuit that implements a corresponding one of the above-described kinds of processing. Further, each of the processing sections may include components such as a CPU, a ROM, and a RAM, and implement a corresponding one of the above-described kinds of processing by executing a program with the components. Naturally, each of the processing sections may have both of the above-described configurations to implement a portion of a corresponding one of the above-described kinds of processing with the logic circuit and implement the other portion of the corresponding processing by executing the program. The configurations of the individual processing sections may be mutually independent and may be made such that, for example, one or more processing sections among the above processing sections each implement a corresponding one of the above-described kinds of processing with a logic circuit, another one or more processing sections among the above processing sections each implement a corresponding one of the above-described kinds of processing by executing a program, and further another one or more processing sections among the above processing sections each implement a corresponding one of the above-described kinds of processing by means of both a logic circuit and the execution of a program.

Implementing such a configuration as described above makes it possible for the encoding device 100 to bring about effects such as those described in <1. Encoding of attribute information>. For example, the encoding device 100 is capable of reducing the decrease of the efficiency of the encoding simultaneously with reducing the increase of the load thereon.

### <Flow of encoding processing>

Next, an example of the flow of encoding processing performed by the encoding device 100 will be described with reference to the flowchart of FIG. 6.

Upon start of the encoding processing, the geometry encoding section 111 encodes geometry data (location information) in step S101.

In step S102, the geometry coefficient rearrangement section 112 rearranges geometry coefficients into the Morton code order.

In step S103, the RAHT processing section 113 performs the RAHT on the geometry data to derive weight values.

In step S104, the context selection section 114 selects contexts on the basis of the weight values having been derived in step S103.

In step S105, the RAHT processing section 121 performs the RAHT on attribute data (attribute information) by using the weight values associated with the geometry and derived in step S103.

In step S106, the quantization section 122 performs quantization on transformed coefficients having been obtained in step S105.

In step S107, the lossless encoding section 123 performs lossless encoding on quantized coefficients (attribute data) having been obtained in step S106, by using the contexts having been selected in step S104.

In step S108, the bitstream generation section 116 generates a bitstream including geometry encoded data having been obtained in step S101 and attribute encoded data having been obtained in step S107.

In step S109, the lossless encoding section 123 outputs the bitstream having been generated in step S108.

Upon completion of the process of step S109, the encoding processing is ended.

Performing the individual processes in such a manner as described above makes it possible for the encoding device 100 to bring about effects such as those described in <1. Encoding of attribute information>. For example, the encoding device 100 is capable of reducing the decrease of the efficiency of the encoding simultaneously with reducing the increase of the load thereon.

### <3. Second embodiment>

### <Decoding device>

FIG. 7 is a block diagram illustrating a configuration example of a decoding device that is an embodiment of the image processing device to which the present technology is applied. A decoding device 200 illustrated in FIG. 7 is a decoding device corresponding to the encoding device 100 of FIG. 5, and is a device that decodes the bitstream having been generated by, for example, the encoding device 100 and restores the data of the point cloud.

Note that FIG. 7 illustrates only main elements of processing sections, data flows, and the like, and the elements illustrated in FIG. 7 are not necessarily all elements. That is, in the decoding device 200, one or more processing sections that are not illustrated as blocks in FIG. 7 may exist, and one or more processes and one or more data flows that are not illustrated as arrows in FIG. 7 may exist.

As illustrated in FIG. 7, the decoding device 200 includes a geometry decoding section 211, a geometry coefficient rearrangement section 212, a RAHT processing section 213, a context selection section 214, an attribute decoding section 215, and a point cloud data generation section 216.

The geometry decoding section 211 performs processing regarding decoding of encoded data associated with location information. For example, the geometry decoding section 211 obtains a bitstream that is input to the decoding device 200, and extracts and decodes the encoded data (geometry encoded data) associated with the location information included in the bitstream. The geometry decoding section 211 supplies coefficient data (geometry data) having been obtained in such a manner as described above to the geometry coefficient rearrangement section 212 and the point cloud data generation section 216.

The geometry coefficient rearrangement section 212 performs processing regarding the rearrangement of geometry coefficients. For example, the geometry coefficient rearrangement section 212 obtains the geometry data supplied from the geometry decoding section 211. The geometry coefficient rearrangement section 212 rearranges individual coefficients of the geometry data (namely, geometry coefficients) into the Morton code order. The geometry coefficient rearrangement section 212 supplies the rearranged geometry data to the RAHT processing section 213. That is, the geometry coefficient rearrangement section 212 supplies the geometry coefficients to the RAHT processing section 213 in the Morton code order.

The RAHT processing section 231 performs processing regarding the RAHT. For example, the RAHT processing section 213 obtains the geometry data supplied from the geometry coefficient rearrangement section 212. Further, the RAHT processing section 213 performs the RAHT on the geometry data to derive weight values regarding the location information. The RAHT processing section 213 supplies the derived weight values to the context selection section 214 and (an inverse RAHT processing section 223 of) the attribute decoding section 215.

The context selection section 214 performs processing regarding the selection of contexts. For example, the context selection section 214 obtains the weight values supplied from the RAHT processing section 213. The context selection section 214 selects the contexts on the basis of the weight values.

For example, the context selection section 214 preliminarily stores therein a plurality of candidates for the contexts. Mutually different weight values (a value region thereof) are (is) assigned to each of the candidates, and any one of the candidates is selected according to the magnitude of a weight value. For example, the selection of any one of the candidates according to the magnitude of a weight value is made in such a way that, in the case where the weight value is smaller than a threshold value A, a context A assigned to this region is selected, in the case where the weight value is equal to or larger than A but smaller than B, a context B assigned to this region is selected, ···, and in the case where the weight value is equal to or larger than Y, a context Z assigned to this region is selected. Note that each of the candidates is set to a value that is further suited for coefficient variation degrees corresponding to an assigned value region.

That is, implemented is a configuration in which the context selection section 214 selects a context on the basis of a weight value and this selection enables selection of the context that is further suited for coefficient variation degrees corresponding to the weight value.

Here, the number of the candidates and the magnitudes of the threshold values may be determined freely. These values may be, for example, preliminarily determined fixed values, or may be values having been set at an encoding side (at the encoding device 100) and having been transmitted therefrom (or may be variable). Implementing such a configuration enables the decoding device 200 to more easily select contexts similar to those for an encoder (for example, the encoding device 100) by using such information.

The context selection section 214 supplies the selected contexts to (an inverse RAHT processing section 223 of) the attribute decoding section 215.

The attribute decoding section 215 performs processing regarding decoding of attribute information. For example, the attribute decoding section 215 obtains encoded data (attribute encoded data) associated with the attribute information included in the bitstream that is input to the decoding device 200, and decodes the encoded data to generate the attribute information (attribute data). The attribute decoding section 215 supplies the generated attribute data to the point cloud data generation section 216.

The point cloud data generation section 216 generates point cloud data including the geometry data supplied from the geometry decoding section 211 and the attribute data supplied from the attribute decoding section 215, and outputs the generated point cloud data to the outside of the decoding device 200.

Further, the attribute decoding section 215 includes the lossless decoding section 221, an inverse quantization section 222, and the inverse RAHT processing section 223.

The lossless decoding section 221 performs processing regarding lossless decoding. For example, the lossless decoding section 221 obtains encoded data (attribute encoded data) associated with attribute information included in the bitstream that is input to the decoding device 200. Further, the lossless decoding section 221 obtains the contexts having been selected by the context selection section 214. The lossless decoding section 221 decodes the obtained attribute encoded data by using the contexts having been selected by the context selection section 214. That is, the lossless decoding section 221 decodes the encoded data of the attribute information of the point cloud by using the contexts corresponding to the weight values obtained by the orthogonal transformation made on the location information of the point cloud, the orthogonal transformation taking into consideration a three-dimensional structure. The lossless decoding section 221 supplies the attribute information (attribute data) having been generated in such a manner as described above to the inverse quantization section 222.

The inverse quantization section 222 performs processing regarding inverse quantization. For example, the inverse quantization section 222 obtains the attribute data supplied from the lossless decoding section 221. Further, the inverse quantization section 222 inverse-quantizes the obtained attribute data. The inverse quantization section 222 supplies transformed coefficients having been obtained by the inverse quantization to the inverse RAHT processing section 223.

The inverse RAHT processing section 223 performs processing regarding inverse RAHT that is processing inverse to the RAHT. For example, the inverse RAHT processing section 223 obtains the transformed coefficients supplied from the inverse quantization section 222. Further, the inverse RAHT processing section 223 obtains the weight values associated with the location information and generated by the RAHT processing section 213. The inverse RAHT processing section 223 performs the inverse RAHT on the transformed coefficients by using the weight values. The inverse RAHT processing section 223 supplies the point cloud data generation section 216 with attribute information (attribute data) having been obtained by the inverse RAHT.

Here, these processing sections (ranging from the geometry decoding section 211 to the point cloud data generation section 216 and ranging from the lossless decoding section 221 to the inverse RAHT processing section 223) each have an optional configuration. For example, each of these processing sections may include a logic circuit that implements a corresponding one of the above-described kinds of processing. Further, each of the processing sections may include components such as a CPU, a ROM, and a RAM and implement a corresponding one of the above-described kinds of processing by executing a program with the components. Naturally, each of the processing sections may have both of the above-described configurations to implement a portion of a corresponding one of the above-described kinds of processing with the logic circuit and implement the other portion of the corresponding processing by executing the program. The configurations of the individual processing sections may be mutually independent and may be made such that, for example, one or more processing sections among the above processing sections each implement a corresponding one of the above-described kinds of processing with a logic circuit, another one or more processing sections among the above processing sections each implement a corresponding one of the above-described kinds of processing by executing a program, and further another one or more processing sections among the above processing sections each implement a corresponding one of the above-described kinds of processing by means of both a logic circuit and the execution of a program.

Implementing such a configuration as described above makes it possible for the decoding device 200 to bring about effects such as those described in <1. Encoding of attribute information>. For example, the decoding device 200 is capable of reducing the decrease of the efficiency of the encoding simultaneously with reducing the increase of the load thereon.

### <Flow of decoding processing>

Next, an example of the flow of decoding processing performed by the decoding device 200 will be described with reference to the flowchart of FIG. 8.

Upon start of the decoding processing, the geometry decoding section 211 decodes a bitstream with respect to geometry in step S201.

In step S202, the geometry coefficient rearrangement section 212 rearranges geometry coefficients having been obtained in step S201 into the Morton code order.

In step S203, the RAHT processing section 213 performs the RAHT on geometry data to derive weight values.

In step S204, the context selection section 214 selects contexts on the basis of the weight values having been obtained in step S203.

In step S205, the lossless decoding section 221 performs lossless decoding on the bitstream with respect to attributes by using the contexts having been selected in step S204. That is, the Lossless decoding section 221 decodes the encoded data associated with the attribute information of the point cloud, by using the contexts corresponding to the weight values obtained by the orthogonal transformation made on the location information of the point cloud, the orthogonal transformation taking into consideration a three-dimensional structure.

In step S206, the inverse quantization section 222 performs inverse quantization on quantized coefficients having been obtained in step S205.

In step S207, the inverse RAHT processing section 223 performs inverse RAHT processing on transformed coefficients by using the weight values regarding the geometry, to generate attribute data.

In step S208, the point cloud data generation section 216 generates point cloud data including the geometry data having been obtained in step S201 and the attribute data having been obtained in step S207.

In step S209, the point cloud data generation section 216 outputs the point cloud data having been generated in step S208 to the outside of the decoding device 200.

Upon completion of the process of step S209, the decoding processing is ended.

Performing the individual processes in such a manner as described above makes it possible for the decoding device 200 to bring about effects such as those described in <1. Encoding of attribute information>. For example, the decoding device 200 is capable of reducing the decrease of the efficiency of the encoding simultaneously with reducing the increase of the load thereon.

### <4. Third embodiment>

### <Encoding device>

For example, in the case where geometry data is encoded with respect to an octree, the condition of the distribution of points can easily be grasped from the octree. That is, the weight values can easily be derived from the octree even without performing the RAHT processing.

FIG. 9 illustrates a main configuration example of the encoding device 100 in this case. When compared with the example of FIG. 5, the encoding device 100 in this case includes a weight calculation section 301 instead of the geometry coefficient rearrangement section 112 and the RAHT processing section 113.

The weight calculation section 301 performs processing regarding the calculation of weight values. For example, the weight calculation section 301 obtains octree data regarding the location information from the geometry encoding section 111. The weight calculation section 301 derives weight values on the basis of the octree regarding the location information. The weight calculation section 301 supplies the derived weight values to the context selection section 114 and the RAHT processing section 121.

When compared with the configuration of FIG. 5, the configuration implemented in such a manner as described above makes the large-loaded processes, i.e., the rearrangement of the geometry coefficients and the RAHT processing, unnecessary, and makes it possible to derive the weight values by means of the small-loaded calculation of the weights from the octree. Thus, the encoding device 100 is capable of reducing the increase of the load to a further degree than in the case of the first embodiment.

### <Flow of encoding processing>

An example of the flow of encoding processing in this case will be described with reference to the flowchart of FIG. 10.

Upon start of the encoding processing, the geometry encoding section 111 encodes geometry data (location information) in step S301, just like in the case of step S101.

In step S302, the weight calculation section 301 calculates weight values from an octree having been obtained in step S301.

Each of the processes of steps S303 to S308 is performed in a manner similar to that of each of the processes of steps S104 to S109 of FIG. 6.

Thus, performing the above individual processes in such a manner as described above enables the encoding device 100 to reduce the decrease the efficiency of the encoding simultaneously with reducing the increase the load thereon, just like in the case of the first embodiment. Further, the encoding device 100 in this case is capable of reducing the increase of the load to a further degree than in the case of the first embodiment.

### <5. Fourth embodiment>

### <Decoding device>

The decoding device 200 may also be configured such that the weight values are derived from the octree, just like in the case of the third embodiment. Implementing such a configuration makes it possible to easily derive the weight values from the octree even without performing the RAHT processing.

FIG. 11 illustrates a main configuration example of the decoding device 200 in this case. When compared with the example of FIG. 7, the decoding device 200 in this case includes a weight calculation section 401 instead of the geometry coefficient rearrangement section 212 and the RAHT processing section 213.

The weight calculation section 401 performs processing regarding the calculation of weight values. For example, the weight calculation section 401 obtains octree data regarding the location information from the geometry decoding section 211. The weight calculation section 401 derives the weight values on the basis of the octree regarding the location information. The weight calculation section 401 supplies the derived weight values to the context selection section 214 and the inverse RAHT processing section 223.

When compared with the configuration of FIG. 7, the configuration implemented in such a manner as described above makes the large-loaded processes, i.e., the rearrangement of the geometry coefficients and the RAHT processing, unnecessary, and makes it possible to derive the weight values by means of the small-loaded calculation of the weights from the octree. Thus, the decoding device 200 in this case is capable of reducing the increase of the load to a further degree than in the case of the second embodiment.

### <Flow of decoding processing>

An example of the flow of decoding processing in this case will be described with reference to the flowchart of FIG. 12.

Upon start of the decoding processing, the geometry decoding section 211 decodes a bitstream with respect to geometry in step S401, just like in the case of step S201.

In step S402, the weight calculation section 401 calculates weight values from an octree having been obtained in step S401.

Each of processes of steps S403 to S408 is performed in a manner similar to that of each of the processes of steps S204 to S209 of FIG. 8.

Thus, performing the above individual processes in such a manner as described above enables the decoding device 200 to reducing the decrease of the efficiency of the encoding simultaneously with suppressing the increase of the load thereon, just like in the case of the second embodiment. Further, the decoding device 200 in this case is capable of reducing the increase of the load to a further degree than in the case of the second embodiment.

### <6. Appended notes>

### <Orthogonal transformation>

Note that, in the above, described is an example in which the RAHT is employed as an orthogonal transformation, but the orthogonal transformation to be performed in the encoding/decoding is not limited to the RAHT, and it is sufficient just to employ, as the orthogonal transformation, an orthogonal transformation taking into consideration a three-dimensional structure. For example, it is sufficient just to employ a graph transformation or the like.

### <Computer>

The above-described series of processes can be executed by hardware or can be executed by software. In the case where the series of processes is executed by software, programs constituting the software are installed in a computer. Here, the computer encompasses a computer embedded in dedicated hardware and a computer, such as a general-purpose personal computer, which is capable of executing various kinds of functions by allowing various kinds of programs to be installed therein.

FIG. 13 is a block diagram illustrating a configuration example of hardware of a computer that performs the above-described series of processes by executing programs.

In a computer 900 illustrated in FIG. 13, a CPU (Central Processing Unit) 901, a ROM (Read Only Memory) 902, and a RAM (Random Access Memory) 903 are coupled to one another via a bus 904.

An input/output interface 910 is also coupled to the bus 904. The input/output interface 910 is couped to an input unit 911, an output unit 912, a storage unit 913, a communication unit 914, and a drive 915.

The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, a non-volatile memory, and the like. The communication unit 914 includes, for example, a network interface. The drive 915 drives a removable medium 921, such as a magnetic disk, an optical disk, a magneto-optical disk, or a semiconductor memory.

In the computer configured in such a manner as described above, the above-described series of processes is performed by allowing the CPU 901 to load programs stored in, for example, the storage unit 913 into the RAM 903 via the input/output interface 910 and the bus 904, and to execute the programs. Data that the CPU 901 needs when executing various kinds of processes and any other kind of data are also stored in the RAM 903 as needed.

The programs executed by the computer (CPU 901) can be applied by being recorded in the removable medium 921 serving as, for example, a package medium or the like. In such case, attaching the removable medium 921 into the drive 915 enables the programs to be installed into the storage unit 913 via the input/output interface 910.

Further, the programs can also be provided via a wired or wireless transmission medium such as a local area network, the Internet, or digital satellite broadcasting. In such case, the programs can be received by the communication unit 914 and can then be installed into the storage unit 913.

In addition to the above, the programs can also be installed in advance in the ROM 902 or the storage unit 913.

### <Application target of the present technology>

Heretofore, described are the examples in which the present technology is applied to the encoding/decoding of point cloud data, but without being limited to these examples, the present technology can be applied to encoding/decoding of 3D data conforming to any standard. That is, unless inconsistent with the above-described present technology, specifications for individual processes for an encoding/decoding method and the like as well as specifications for various kinds of data such as 3D data and meta data are optional. Further, a portion of the above-described processes and/or a portion of the above-described specifications may be omitted unless inconsistency with the present technology arises.

The present technology can be applied to any configuration. For example, the present technology can be applied to transmitters and receivers (for example, television receivers and mobile-phones) for use in satellite broadcasting, cable broadcasting such as cable TV, delivery over the internet, delivery to terminals with use of cellular communication, and the like. Further, for example, the present technology can be applied to various electronic devices such as devices (for example, a hard disk recorder and a camera) each for recording images into a storage medium such as an optical disk, a magnetic disk, or a flash memory and reproducing the images from the storage medium.

Further, for example, the present technology can also be practiced as a partial constituent element of a device such as a processor (for example, a video processor) as system LSI (Large Scale Integration) or the like, a module (for example, a video module) using a plurality of processors or the like, a unit (for example, a video unit) using a plurality of modules or the like, a set (for example, a video set) including a unit and other functions added to the unit, or any other similar device.

Further, for example, the present technology can also be applied to a network system including plural devices. For example, the present technology may be configured to be practiced as a cloud computing that allows plural devices to perform processing via a network in a load-shared and collaborated manner. For example, the present technology may be configured to be practiced in a cloud service that provides services regarding images (moving images) to any of terminals such as a computer, AV (Audio Visual) equipment, a portable information processing terminal, and an IoT (Internet of Things) device.

Note that, in the present description, a system means a set of plural constituent elements (devices, modules (parts), and the like), and all of the constituent elements are not necessarily mounted in the same housing. Thus, plural devices mounted in different housings and coupled to one another via a network and one device whose plural modules are mounted in one housing are both systems.

### <Fields and applications to which the present technology is applicable>

A system, a device, a processing unit, and the like to which the present technology is applied can be used in any of such fields as transportation, medical care, crime prevention, agriculture, livestock industry, mining, beauty, factories, home appliances, weather, and nature monitoring. Further, the application of the present technology can also be determined freely.

### <Others>

Note that, in the present description, a "flag" is information for identifying plural states and includes not only information for use in identifying two states of true (1) or false (0), but also information capable of identifying three or more states. Thus, values that the "flag" can take may be, for example, two values, i.e., "1" and "0," or three or more values. That is, the number of bits constituting the "flag" can be any number, and one bit or plural bits can be employed. Further, identification information (including the flag) is assumed to have not only a form in which the identification information is included in a bitstream, but also a form in which difference information regarding the identification information with respect to certain reference information is included in the bitstream, and thus, in the present description, the "flag" and the "identification information" encompass not only the information itself, but also difference information regarding the information itself with respect to the reference information.

Further, various kinds of information (metadata and the like) regarding encoded data (bitstream) may be configured to be transmitted or recorded in any form, provided that the various kinds of information are associated with the encoded data. Here, the term "associate" means, for example, to, at the time of processing data on one side, make it possible to use (link) data on the other side. That is, pieces of data associated with each other may be integrated as one set of data, or may each be handled as a single piece of data. For example, information associated with encoded data (image) may be transmitted over a transmission path different from that for the encoded data (image). Further, for example, information associated with encoded data (image) may be recorded in a recording medium different from that for the encoded data (image) (or in a recording area different from that for the encoded data (image) in the same recording medium). In addition, the target of the "associate" may be not only the whole of data, but also a partial portion of the data. For example, an image and information corresponding to the image may be associated with each other in a unit of any of plural frames, one frame, a partial portion within a frame, and the like.

In addition, in the present description, terms "synthesize," "multiplex," "add," "integrate," "incorporate," "store," "put into," "inset," "insert," and the like mean that plural objects are unified into one object, like an example in which encoded data and meta data are unified into one set of data, and each of the above terms means one of methods for the above "associate."

Further, embodiments of the present technology are not limited to the above-described embodiments, and various modifications can be made within the scope not departing from the gist of the present technology.

For example, the configuration having been described as one device (processing section) may be separated and configured as plural devices (processing sections). In contrast, the configurations having been described above as plural devices (processing sections) may be unified and configured as one device (processing section). Further, naturally, a configuration other than the configurations described above may be added to the configuration of each device (or each processing section). Further, a partial portion of the configuration of a certain device (or processing section) may be included in the configuration of another device (or another processing section), provided that the configuration and operation of the entire system are not substantially changed.

Further, for example, the program described above may be executed in any device. In such case, it is sufficient just to enable the device to have necessary functions (function blocks or the like) and obtain necessary information.

Further, for example, individual steps of one flowchart may be executed by one device, or may be shared and executed by plural devices. Moreover, in the case where plural processes are included in one step, the plural processes may be performed by one device, or may be shared and performed by plural devices. In other words, the plural processes included in one step can be performed as processes of plural steps. In contrast, processes having been described as plural steps can be unified and performed as one step.

Further, for example, for programs executed by a computer, processes of steps for writing the programs may be executed in chronological order according to the order described in the present description, or may be executed in parallel. Alternatively, the programs may be executed individually at required timings such as a timing at which calling is made. That is, unless inconsistency arises, the processes of individual steps may be executed in an order different from the order described above. Further, the processes of steps for writing a program may be performed in parallel with the processes of another program, or may be performed in combination with the processes of another program.

Further, for example, plural technologies regarding the present technology can be individually and independently practiced unless inconsistency arises. Naturally, any of plural technologies regarding the present technologies can be practiced in combination. For example, a partial portion or the whole portion of the present technology, which has been described in any one of the embodiments, can be practiced in combination with a partial portion or the whole portion of the present technology, which has been described in another one of the embodiments. Further, any partial portion or the whole portion of the present technology having been described above can be practiced in combination with another technology that is not included in the above description.

It should be noted that the present technology can also have the following configurations.
(1) An image processing device including:
   an encoding section that encodes attribute information of a point cloud by using contexts corresponding to weight values obtained by an orthogonal transformation made on location information of the point cloud, the orthogonal transformation taking into consideration a three-dimensional structure.
(2) The image processing device according to (1), further including:
   a context selection section that selects the contexts corresponding to the weight values,
   in which the encoding section encodes the attribute information by using the contexts having been selected by the context selection section.
(3) The image processing device according to (2), in which the context selection section selects the contexts according to the weight values by using a preliminarily determined number of the contexts and preliminarily determined threshold values associated with the weight values.
(4) The image processing device according to (2) or (3), in which the context selection section selects the contexts according to the weight values by using a set number of the contexts and set threshold values associated with the weight values.
(5) The image processing device according to any one of (2) to (4), further including:
   a weight value deriving section that derives the weight values,
   in which the context selection section selects the contexts corresponding to the weight values having been derived by the weight value deriving section.
(6) The image processing device according to (5), in which the weight value deriving section performs RAHT (Region Adaptive Hierarchical Transform) as the orthogonal transformation on the location information, to derive the weight values.
(7) The image processing device according to (5) or (6), in which the weight value deriving section derives the weight values on the basis of an octree regarding the location information.
(8) The image processing device according to any one of (5) to (7), further including:
   a RAHT (Region Adaptive Hierarchical Transform) processing section that performs RAHT on the attribute information by using the weight values having been derived by the weight value deriving section,
   in which the encoding section encodes transformed coefficients associated with the attribute information and generated by the RAHT processing section.
(9) The image processing device according to any one of (1) to (8), further including:
   a bitstream generation section that generates a bitstream including encoded data associated with the location information and encoded data associated with the attribute information and generated by the encoding section.
(10) An image processing method including:
   encoding attribute information of a point cloud by using contexts corresponding to weight values obtained by an orthogonal transformation made on location information of the point cloud, the orthogonal transformation taking into consideration a three-dimensional structure.
(11) An image processing device including:
   a decoding section that decodes encoded data associated with attribute information of a point cloud, by using contexts corresponding to weight values obtained by an orthogonal transformation made on location information of the point cloud, the orthogonal transformation taking into consideration a three-dimensional structure.
(12) The image processing device according to (11), further including:
   a context selection section that selects the contexts corresponding to the weight values,
   in which the decoding section decodes the encoded data associated with the attribute information, by using the contexts having been selected by the context selection section.
(13) The image processing device according to (12), in which the context selection section selects the contexts according to the weight values by using a preliminarily determined number of the contexts and preliminarily determined threshold values associated with the weight values.
(14) The image processing device according to (12) or (13), in which the context selection section selects the contexts according to the weight values by using the number of the contexts and threshold values associated with the weight values that are supplied from an encoding side.
(15) The image processing device according to any one of (12) to (14), further including:
   a weight value deriving section that derives the weight values,
   in which the context selection section selects the contexts corresponding to the weight values having been derived by the weight value deriving section.
(16) The image processing device according to (15), in which the weight value deriving section performs RAHT (Region Adaptive Hierarchical Transform) as the orthogonal transformation on the location information, to derive the weight values.
(17) The image processing device according to (15) or (16), in which the weight value deriving section derives the weight values on the basis of an octree regarding the location information.
(18) The image processing device according to any one of (15) to (17), further including:
   an inverse RAHT (Region Adaptive Hierarchical Transform) processing section that performs inverse RAHT on the attribute information having been generated by the decoding section, by using the weight values having been derived by the weight value deriving section.
(19) The image processing device according to any one of (11) to (18), further including:
   a point cloud data generation section that generates point cloud data including the location information and the attribute information having been generated by the decoding section.
(20) An image processing method including:
   decoding encoded data associated with attribute information of a point cloud, by using contexts corresponding to weight values obtained by an orthogonal transformation made on location information of the point cloud, the orthogonal transformation taking into consideration a three-dimensional structure.

### [Reference Signs List]

- 100:: Encoding device
- 111:: Geometry encoding section
- 112:: Geometry coefficient rearrangement section
- 113:: RAHT processing section
- 114:: Context selection section
- 115:: Attribute encoding section
- 116:: Bitstream generation section
- 121:: RAHT processing section
- 122:: Quantization section
- 123:: Lossless encoding section
- 200:: Decoding device
- 211:: Geometry decoding section
- 212:: Geometry coefficient rearrangement section
- 213:: RAHT processing section
- 214:: Context selection section
- 215:: Attribute decoding section
- 216:: Point cloud data generation section
- 221:: Lossless decoding section
- 222:: Inverse quantization section
- 223:: Inverse RAHT processing section
- 301:: Weight calculation section
- 401:: Weight calculation section

## Claims

1. An image processing device comprising:
an encoding section that encodes attribute information of a point cloud by using contexts corresponding to weight values obtained by an orthogonal transformation made on location information of the point cloud, the orthogonal transformation taking into consideration a three-dimensional structure.

2. The image processing device according to claim 1, further comprising:
a context selection section that selects the contexts corresponding to the weight values,
wherein the encoding section encodes the attribute information by using the contexts having been selected by the context selection section.

3. The image processing device according to claim 2, wherein the context selection section selects the contexts according to the weight values by using a preliminarily determined number of the contexts and preliminarily determined threshold values associated with the weight values.

4. The image processing device according to claim 2, wherein the context selection section selects the contexts according to the weight values by using a set number of the contexts and set threshold values associated with the weight values.

5. The image processing device according to claim 2, further comprising:
a weight value deriving section that derives the weight values,
wherein the context selection section selects the contexts corresponding to the weight values having been derived by the weight value deriving section.

6. The image processing device according to claim 5, wherein the weight value deriving section performs RAHT (Region Adaptive Hierarchical Transform) as the orthogonal transformation on the location information, to derive the weight values.

7. The image processing device according to claim 5, wherein the weight value deriving section derives the weight values on a basis of an octree regarding the location information.

8. The image processing device according to claim 5, further comprising:
a RAHT (Region Adaptive Hierarchical Transform) processing section that performs RAHT on the attribute information by using the weight values having been derived by the weight value deriving section,
wherein the encoding section encodes transformed coefficients associated with the attribute information and generated by the RAHT processing section.

9. The image processing device according to claim 1, further comprising:
a bitstream generation section that generates a bitstream including encoded data associated with the location information and encoded data associated with the attribute information and generated by the encoding section.

10. An image processing method comprising:
encoding attribute information of a point cloud by using contexts corresponding to weight values obtained by an orthogonal transformation made on location information of the point cloud, the orthogonal transformation taking into consideration a three-dimensional structure.

11. An image processing device comprising:
a decoding section that decodes encoded data associated with attribute information of a point cloud, by using contexts corresponding to weight values obtained by an orthogonal transformation made on location information of the point cloud, the orthogonal transformation taking into consideration a three-dimensional structure.

12. The image processing device according to claim 11, further comprising:
a context selection section that selects the contexts corresponding to the weight values,
wherein the decoding section decodes the encoded data associated with the attribute information, by using the contexts having been selected by the context selection section.

13. The image processing device according to claim 12, wherein the context selection section selects the contexts according to the weight values by using a preliminarily determined number of the contexts and preliminarily determined threshold values associated with the weight values.

14. The image processing device according to claim 12, wherein the context selection section selects the contexts according to the weight values by using the number of the contexts and threshold values associated with the weight values that are supplied from an encoding side.

15. The image processing device according to claim 12, further comprising:
a weight value deriving section that derives the weight values,
wherein the context selection section selects the contexts corresponding to the weight values having been derived by the weight value deriving section.

16. The image processing device according to claim 15, wherein the weight value deriving section performs RAHT (Region Adaptive Hierarchical Transform) as the orthogonal transformation on the location information, to derive the weight values.

17. The image processing device according to claim 15, wherein the weight value deriving section derives the weight values on a basis of an octree regarding the location information.

18. The image processing device according to claim 15, further comprising:
an inverse RAHT (Region Adaptive Hierarchical Transform) processing section that performs inverse RAHT on the attribute information having been generated by the decoding section, by using the weight values having been derived by the weight value deriving section.

19. The image processing device according to claim 11, further comprising:
a point cloud data generation section that generates point cloud data including the location information and the attribute information having been generated by the decoding section.

20. An image processing method comprising:
decoding encoded data associated with attribute information of a point cloud, by using contexts corresponding to weight values obtained by an orthogonal transformation made on location information of the point cloud, the orthogonal transformation taking into consideration a three-dimensional structure.
